# EUROPEAN PATENT SPECIFICATION

(11) **EP 4 149 802 B1**
(45) Date of publication and mention of the grant of the patent: **06.03.2024**
(21) Application number: 21719713.6
(22) Date of filing: 24.03.2021
(51) Int. Cl.: B60T 7/20, B60T 7/12

(54) **APPARATUS FOR THE BRAKING PROCESS OF A VEHICLE WITH A TRAILER**
BREMSGERÄT ZUM BREMSEN EINES FAHRZEUGS MIT ANHÄNGER
APPAREIL POUR LE FREINAGE D'UN VÉHICULE AVEC REMORQUE

(30) Priority: 14.05.2020 IT 202000011062
(43) Date of publication of application: 22.03.2023
(73) Proprietor: Same Deutz-Fahr Italia S.p.A., 24047 Treviglio (Bergamo) (IT)
(72) Inventor: FRIGNATI, Davide, 24047 Treviglio, Bergamo (IT); BAUR, Wolfgang Richard, 24047 Treviglio, Bergamo (IT); MÜLLER, Jörg Georg, 24047 Treviglio, Bergamo (IT); BURRONI, Emanuele, 24047 Treviglio, Bergamo (IT); CREMONESI, Carlo, 24047 Treviglio, Bergamo (IT); BASSANI, Marco, 24047 Treviglio, Bergamo (IT)
(74) Representative: Pulieri, Gianluca Antonio
(86) International application number: PCT/IB2021/052440
(87) International publication number: WO 2021/229313

(56) References cited:
- EP-A1- 2 269 880
- CN-A- 110 822 054
- SU-A1- 783 083
- US-A- 4 153 143
- US-A- 5 251 966
- US-A1- 2016 251 005
- US-A1- 2018 134 300
- US-A1- 2019 129 440

## Description

### Field of the invention

The present invention pertains to the field of farm tractors, and in particular to the field of apparatuses for the braking process of vehicles consisting of a tractor and one or more trailers.

### Background art

The need is strongly felt in such a field to provide braking apparatuses provided with specific control systems which take into consideration the presence of the trailers, which obviously have a considerable impact on the braking performance of the entire vehicle. There are several apparatuses for the braking process of vehicles with a trailer.

For example, some solutions are disclosed in documents WO-A1-2018/077470, WO-A1-2016/192855, WO-A1-2015/104168, EP2123528, WO-A1-2008/141740 and EP1800982.

Document US 2016/251005 A1 discloses a tractor-trailer combination according to the preamble of claim 1. In particular the tractor comprises electronic management means for controlling the trailer brakes.

### Object of the invention

It is the object of the present invention to provide a further apparatus for the braking process of vehicles with a trailer, the control system of which is particularly effective.

Such an object is achieved by an apparatus for the braking process of a vehicle with a trailer according to claim 1. The dependent claims describe further advantageous embodiments of the invention.

### Brief description of the drawings

The features and advantages of the braking apparatus according to the present invention will become apparent from the following description, given by way of nonlimiting example, according to the accompanying drawings, in which:
- Figure 1 diagrammatically shows a vehicle with tractor and trailer, according to an embodiment of the present invention;

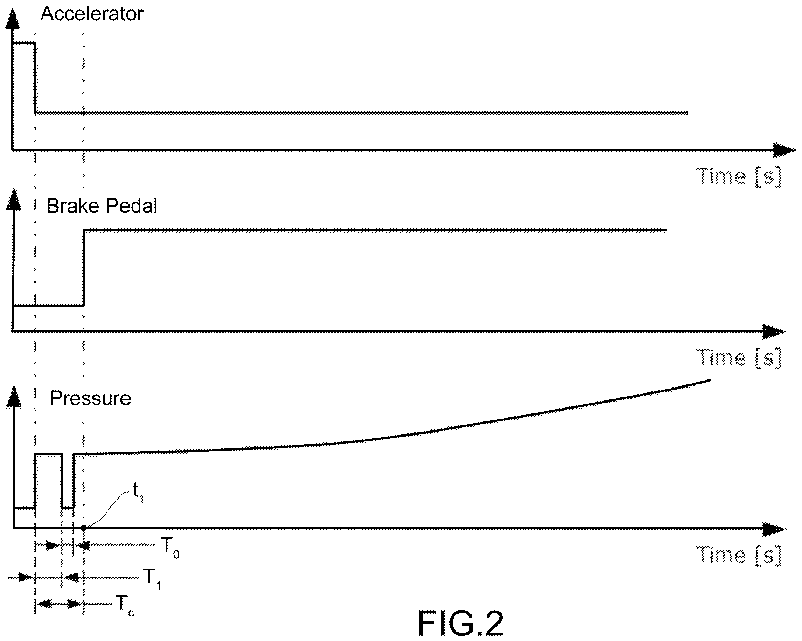

- Figure 2 shows the configuration of an accelerator and a brake and the pressure trend under a coasting condition and under a successive braking condition of the apparatus according to the present invention.

### Description of an embodiment

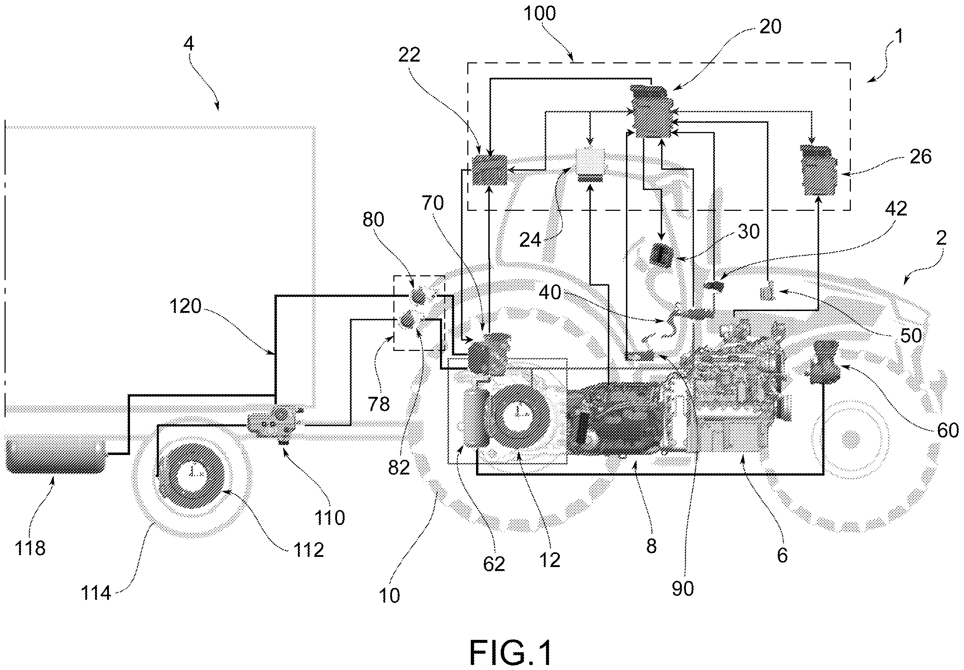

With reference to accompanying Figure 1, a vehicle 1 consists of a tractor 2 and at least one trailer 4, which is operatively connected to tractor 2 to be dragged by the latter.

Tractor 2 comprises an internal combustion engine 6 and a gearbox assembly 8 connected to engine 6 and to the rear wheel axle 10 of tractor 2 to actuate it in rotation.

Tractor 2 further comprises electronic management means 100 for managing the braking process of the tractor and the trailer. Said management means 100 comprise vehicle control means 20, trailer braking control means 22, gearbox control means 24 and engine control means 26, all operatively connected to the vehicle control means 20. The vehicle control means 20 operate as masters with respect to the other control means 22, 24, 26, which operate as slaves.

A braking apparatus according to the present invention comprises a tractor brake system and a trailer brake system.

Tractor 2 comprises the tractor brake system, comprising a brake 12 applied to each wheel 10, for example to the hub thereof, which is adapted to apply a braking action to said wheel 10. The tractor brake system further comprises a brake assembly 40, comprising at least one brake pedal which may be actuated by a driver sitting in the driving cabin, a brake pump which may be actuated by the brake pedal and is operatively connected to each brake 12, and a brake sensor adapted to detect the actuation of the brake pedal, as well as a braking pressure sensor 42 for detecting and signaling the braking pressure applied by the brake pump.

According to one embodiment variant, the brake assembly 40 comprises a right brake pedal and a left brake pedal for the braking process of the right wheels alone and of the left wheels alone, respectively.

The brake sensor is operatively connected to the management means 100, and in particular to the vehicle control means 20, in order to signal the actuation of the brake pedal. Moreover, the braking pressure sensor 42 is operatively connected to the management means 100, and in particular to the vehicle control means 20, in order to signal the amount of the pressure generated by the actuation of the pump.

Tractor 2 further comprises a trailer brake device comprising a hydraulic or pneumatic trailer pump 60 for the braking process of the trailer, preferably a main trailer tank 62 for storing pressurized oil or air, fed by the trailer pump 60, and a trailer brake master valve 70 supplied by means of the main trailer pump 60 and/or the main trailer tank 62, which is controlled by the brake assembly 12 and is operatively connected to the management means 100, and in particular to the trailer braking control means 22.

The trailer brake device further comprises a trailer interface 78 for the hydraulic or pneumatic connection with trailer 4. In particular, the trailer interface 78 comprises a power socket 80 connected to the trailer brake master valve 70 for supplying pressurized oil or air to actuate the trailer brakes, and a signal socket 82 connected to the trailer brake master valve 70 for sending a hydraulic or pneumatic control signal for the braking process.

Moreover, tractor 2 preferably comprises a clinometer 50 for detecting the tilt of the tractor due to the slope of the road surface on which the tractor is traveling. The clinometer 50 is operatively connected to the management means 100, and in particular to the vehicle control means 20.

Moreover, tractor 2 preferably comprises a display 30 for providing the driver with information, which is preferably located in the driving cabin of the tractor. Display 30 is operatively connected to the management means 100, and in particular to the vehicle control means 20.

Finally, tractor 2 further comprises an accelerator 90 for the acceleration of the vehicle. Accelerator 90 is also operatively connected to the management means 100, and in particular to the vehicle control means 20.

According to one embodiment variant, accelerator 90 comprises an accelerator pedal which may be foot-operated by the driver and/or an accelerator knob which may be hand-operated by the driver.

Trailer 4 comprises a trailer brake system which may be connected to the trailer interface 78, comprising a secondary trailer brake valve 110 operatively connected to the power socket 80 by means of a trailer brake circuit 120 and to the signal socket 82, a trailer brake 112 applied to each wheel 114 of trailer 4, for example to the hub thereof, adapted to apply a braking action to said wheel 114, operatively connected to the secondary trailer brake valve 110, and preferably a secondary trailer tank 118 for storing pressurized oil or air for the trailer brake circuit. For example, the secondary trailer tank 118 is connected to the trailer brake circuit 120.

According to the invention, the management means 100 detect a condition of driving inertia of the vehicle, called "coasting". Such a condition of inertia occurs when the following conditions simultaneously exist:
- if the speed of the tractor is greater than a limit speed Vt; and
- the brake assembly 40 does not actuate the tractor brake 12, i.e., no braking process of tractor 2 is in progress; and
- the pedal and/or manual accelerator 90 is not actuated and preset speed conditions are not operative.

A coasting condition is also detected if:
- if the speed of the tractor is greater than a limit speed Vt; and
- the brake assembly 40 does not actuate the tractor brake 12, i.e., no braking process of tractor 2 is in progress; and
- the tractor is idle, i.e., the gearbox is set to neutral in a tractor with automatic gearbox, or if the clutch pedal is pressed in a tractor with manual gearbox.

In other words, under coasting conditions, the speed of tractor 2 is greater than a limit speed Vt and the brake assembly 40 does not actuate the tractor brake 12, and engine 6 does not supply power to the tractor wheels 10, the latter condition occurring in the absence of the actuation of an accelerator, of a preset speed or under idle conditions.

Under such conditions, the trailer braking control means 22 control the trailer brake master valve 70 so as to increase the pressure of the oil or of the air in the trailer brake circuit 120 from a preexisting base pressure P0 to a coasting pressure Pc, in any case keeping such a pressure below an actuation pressure Pb which induces the actuation of the trailer brake 112.

When the driver controls the braking process, for example at instant t_{b}, the brake assembly 40 signals the lowering of the brake pedal to the management means 100 and the tractor brake 12 is actuated, and simultaneously the trailer brake 112 is actuated by means of the main trailer braking valve 70 and the trailer braking system.

This results in a further increase of the pressure in the trailer brake circuit, up to exceeding the actuation pressure Pb, thus inducing the actuation of the trailer brake 112. Since the pressure in the trailer brake circuit 120 was already greater than the base pressure P0 by virtue of the increase in pressure under the coasting conditions, the pressure in the trailer brake circuit 120 exceeds the actuation pressure Pb more quickly so that the response of the trailer braking system is immediate.

In an embodiment of the invention, if the coasting conditions continue, for example for a coasting time Tc, the trailer braking control means 22 control the main trailer braking valve 70 so as to maintain the coasting pressure Pc for a predefined maintenance time Ti, which is less than the coasting time Tc; after such a maintaining time, the pressure returns to the base value P0, for example for a base time T0, to then increase again up to the coasting pressure Pc, under the control of said means 70.

In other words, in such an embodiment, the pressure in the trailer brake circuit during the coasting time Tc fluctuates with a square wave trend, between the coasting pressure Pc and the base pressure P0.

In a further embodiment of the invention, if the coasting conditions continue, for example for a coasting time Tc, the trailer braking control means 22 control the main trailer braking valve 70 so as to maintain the coasting pressure Pc for the entire coasting time Tc.

Moreover, according to the invention, if the coasting conditions no longer occur and there is no braking by the driver, the management means 100 re-establish the base conditions, i.e., the pressure in the trailer brake circuit returns to the base value P0.

Preferably, the management means 100 re-establish the basic conditions, i.e., the pressure in the trailer brake circuit returns to the base value P0 if the coasting conditions no longer occurred for a waiting time Tz so as to avoid sudden and repeated increases and decreases of the pressure in the trailer brake circuit.

Innovatively, the braking apparatus according to the present invention meets the industry needs, and in particular allows to brake the trailer without delay with respect to the control given by the driver.

It is apparent that, in order to meet contingent needs, those skilled in the art may make changes to the braking apparatus described above, all contained within the scope of protection as defined by the following claims.

## Claims

1. A vehicle (1) consisting of a tractor (2) and at least one trailer (4) that is mechanically connected to the tractor (2) in order to be dragged in motion, wherein:
- the tractor (2) comprises an engine (6), tractor wheels (10), at least one tractor brake (12), which may be actuated in order to brake a particular tractor wheel (10), a brake assembly (40), which is provided with a brake pedal in order to actuate the tractor brake (12) to brake, a trailer brake master valve (70), which is operatively connected to the brake assembly (40), and an accelerator (90) that is operatively connected to the engine (6);
- the tractor (2) further comprises electronic management means (100) comprising trailer braking management means (22) and engine management means (26), said management means (100) being operatively connected to the trailer brake master valve (70), to the brake assembly (40) and to the engine (6);
- the trailer (4) comprises trailer wheels (114) and at least one trailer brake (112) that may be actuated in order to brake a particular trailer wheel (114), wherein the trailer brake (112) is operatively connected to the trailer brake master valve (70) of the tractor (2) by means of a trailer brake circuit (120) and may be actuated when the pressure in the trailer brake circuit (120) is equal to or greater than a braking pressure (Pb) ;
- **characterised in that** the management means (100) are configured to control the trailer brake master valve (70) so as to increase the pressure in the trailer brake circuit (120) from an existing base pressure (P0) to a coasting pressure (Pc), which is smaller than the braking pressure (Pb), when said management means (100) detect a coasting condition in which the speed of the tractor (2) is greater than a limit speed (Vt), the brake assembly (40) does not actuate the tractor brake (12), and the engine (6) does not supply power to the tractor wheels (10).

2. The vehicle as per claim 1, wherein
- the management means (100) are configured to maintain the coasting pressure (Pc) for a maintenance time (Ti) if the coasting conditions continue, and to bring the pressure in the trailer brake circuit (120) towards the base pressure (P0) for a base time (T0) after the maintenance time (Ti), and to bring the pressure in the trailer brake circuit (120) to the coasting pressure (Pc) after the base time (T0), and keep it there for a maintenance time (Ti).

3. The vehicle as per claim 1, wherein
- the management means (100) are configured to maintain the coasting pressure (Pc) until the coasting conditions continue.

4. The vehicle as per any one of the preceding claims, wherein
- the actuation means (100) are configured to bring the pressure in the trailer brake circuit (120) back towards the base pressure (P0) if the engine supplies power to the wheels.

5. The vehicle as per claim 4, wherein
- the actuation means (100) are configured to bring the pressure in the trailer brake circuit (120) back towards the base pressure (P0) if the engine supplies power at least for a waiting time (Tz).

6. The vehicle as per any one of the preceding claims, wherein
- the actuation means (100) are configured to detect the actuation of a braking process by means of a driver and to consequently actuate the tractor brake (12) and the trailer brake (112) at the same time.

7. A method for managing a braking process of a vehicle that consists of a tractor (2), which is provided with an engine (6) and a brake pedal, and of at least one trailer (4) that is provided with a trailer brake (112), said method **characterised by** the step of increasing the pressure in a trailer brake circuit (120) that is connected to the trailer brake (112) from a preexisting base pressure (P0) to a coasting pressure (Pc), which is smaller than an actuating pressure (Pb) that may actuate the trailer brake (112) for the braking process, in a coasting condition in which the speed of the tractor is greater than a limit speed (Vt), the engine (6) does not supply power to the wheels, and the tractor (2) is not braked.

## Patentansprüche

1. Fahrzeug (1), bestehend aus einem Traktor (2) und zumindest einem Anhänger (4), der mit dem Traktor (2) mechanisch verbunden ist, um in Bewegung gezogen zu werden, wobei:
der Traktor (2) einen Motor (6), Traktorräder (10), zumindest eine Traktorbremse (12), die zum Bremsen eines bestimmten Traktorrads (10) aktiviert werden kann, eine Bremsanordnung (40), die mit einem Bremspedal versehen ist, um die Traktorbremse (12) zum Bremsen zu aktivieren, ein Anhängerbremshauptventil (70), das mit der Bremsanordnung (40) betriebsmäßig verbunden ist, sowie einen Beschleuniger (90), der mit dem Motor (6) betriebsmäßig verbunden ist, aufweist;
- der Traktor (2) ferner elektronische Verwaltungsmittel (100) aufweist, die Anhängerbremsverwaltungsmittel (22) und Motorverwaltungsmittel (26) aufweisen, wobei die Verwaltungsmittel (100) mit dem Anhängerbremshauptventil (70), der Bremsanordnung (40) und dem Motor (6) betriebsmäßig verbunden sind;
- der Anhänger (4) Anhängerräder (114) und zumindest eine Anhängerbremse (112) aufweist, die zum Bremsen eines bestimmten Anhängerrads (114) betätigt werden kann, wobei die Anhängerbremse (112) mit dem Anhängerbremshauptventil (70) des Traktors (2) mittels eines Anhängerbremskreises (120) betriebsmäßig verbunden ist, und aktiviert werden kann, wenn der Druck im Anhängerbremskreis (120) gleich oder größer als ein Bremsdruck (Pb) ist;
**dadurch gekennzeichnet, dass** die Verwaltungsmittel (100) konfiguriert sind, um das Anhängerbremshauptventil (70) zu steuern, um den Druck in dem Anhängerbremskreis (120) von einem existierenden Basisdruck (P0) zu einem Leerlaufdruck (Pc), der kleiner als der Bremsdruck (Pb) ist, zu erhöhen, wenn die Verwaltungsmittel (100) einen Leerlaufzustand detektieren, in dem die Geschwindigkeit des Traktors (2) größer als eine Grenzgeschwindigkeit (Vt) ist, die Bremsanordnung (40) die Traktorbremse (12) nicht aktiviert und der Motor (6) den Traktorrädern (10) keine Kraft zuführt.

2. Das Fahrzeug nach Anspruch 1, wobei
- die Verwaltungsmittel (100) konfiguriert sind, um den Leerlaufdruck (Pc) für eine Haltezeit (Ti) beizubehalten, wenn die Leerlaufbedingungen fortdauern, und um für eine Basiszeit (T0) nach der Haltezeit (Ti) den Druck in dem Anhängerbremskreis (120) zu dem Basisdruck (P0) hin zu bringen, und um nach der Basiszeit (T0) den Druck in dem Anhängerbremskreis (120) auf den Leerlaufdruck (Pc) zu bringen und ihn dort für eine Haltezeit (Ti) zu halten.

3. Das Fahrzeug nach Anspruch 1, wobei
- die Verwaltungsmittel (100) konfiguriert sind, um den Leerlaufdruck (Pc) beizubehalten, bis die Leerlaufbedingungen fortdauern.

4. Das Fahrzeug nach einem der vorhergehenden Ansprüche, wobei
- die Aktivierungsmittel (100) konfiguriert sind, um den Druck in dem Anhängerbremskreis (120) zurück zum Basisdruck (P0) zu bringen, wenn der Motor den Rädern Kraft zuführt.

5. Das Fahrzeug nach Anspruch 4, wobei
- die Aktivierungsmittel (100) konfiguriert sind, um den Druck in dem Anhängerbremskreis (120) zurück zum Basisdruck (P0) zu bringen, wenn der Motor zumindest für eine Wartezeit (Tz) Kraft zuführt.

6. Das Fahrzeug nach einem der vorhergehenden Ansprüche, wobei
- die Aktivierungsmittel (100) konfiguriert sind, um die Aktivierung eines Bremsprozesses mittels eines Fahrzeugs zu detektieren und demzufolge die Traktorbremse (12) und die Anhängerbremse (112) gleichzeitig zu aktivieren.

7. Verfahren zum Verwalten eines Bremsprozesses eines Fahrzeugs, das aus einem Traktor (2), der mit einem Motor (6) und einem Bremspedal versehen ist, und zumindest einem Anhänger (4), der mit einer Anhängerbremse (112) versehen ist, besteht, wobei das Verfahren **gekennzeichnet ist durch** den Schritt, den Bremsdruck in einem Anhängerbremskreis (120), der mit der Anhängerbremse (112) verbunden ist, von einem zuvor existierenden Basisdruck (P0) auf einen Leerlaufdruck (Pc), der kleiner als ein Aktivierungsdruck (Pb) ist, der die Anhängerbremse (112) für den Bremsprozess aktivieren kann, in einem Leerlaufzustand zu erhöhen, in dem die Geschwindigkeit des Traktors größer als eine Grenzgeschwindigkeit (Vt) ist, der Motor (6) den Rädern keine Kraft zuführt und der Traktor (2) nicht gebremst wird.

## Revendications

1. Véhicule (1) constitué d'un tracteur (2) et au moins d'une remorque (4) qui est mécaniquement reliée au tracteur (2) afin d'être tirée en mouvement, dans lequel :
- le tracteur (2) comprend un moteur (6), des roues de tracteur (10), au moins un frein de tracteur (12) qui peut être actionné afin de freiner une roue de tracteur particulière (10), un ensemble de frein (40) qui est doté d'une pédale de frein afin d'actionner le frein de tracteur (12) pour qu'il freine, une vanne maîtresse de frein de remorque (70) qui est reliée en fonctionnement à l'ensemble de frein (40), et un accélérateur (90) qui est relié en fonctionnement au moteur (6) ;
- le tracteur (2) comprend en outre des moyens de gestion électroniques (100) comprenant des moyens de gestion de freinage de remorque (22) et des moyens de gestion de moteur (26), lesdits moyens de gestion (100) étant reliés en fonctionnement à la vanne maîtresse de frein de tracteur (70), à l'ensemble de frein (40) et au moteur (6) ;
- la remorque (4) comprend des roues de remorque (114) et au moins un frein de remorque (112) qui peut être actionné afin de freiner une roue de remorque particulière (114), dans lequel le frein de remorque (112) est relié en fonctionnement à la vanne maîtresse de frein de remorque (70) du tracteur (2) au moyen d'un circuit de frein de remorque (120) et peut être actionné lorsque la pression dans le circuit de frein de remorque (120) est égale ou supérieure à une pression de freinage (Pb) ;
- **caractérisé en ce que**
les moyens de gestion (100) sont configurés pour commander la vanne maîtresse de frein de remorque (70) de sorte à augmenter la pression dans le circuit de frein de remorque (120) d'une pression de base existante (P0) à une pression de marche en roue libre (Pc) qui est inférieure à la pression de freinage (Pb), lorsque lesdits moyens de gestion (100) détectent une condition de marche en roue libre, dans laquelle la vitesse du tracteur (2) est supérieure à une vitesse limite (Vt), l'ensemble de frein (40) n'actionne pas le frein de tracteur (12), et le moteur (6) ne fournit pas d'énergie aux roues de tracteur (10).

2. Véhicule selon la revendication 1, dans lequel
- les moyens de gestion (100) sont configurés pour maintenir la pression de marche en roue libre (Pc) pendant un temps de maintenance (Ti) si les conditions de marche en roue libre continuent, et pour amener la pression dans le circuit de frein de remorque (120) vers la pression de base (P0) pendant un temps de base (TO) après le temps de maintenance (Ti), et pour amener la pression dans le circuit de frein de remorque (120) à la pression de marche en roue libre (Pc) après le temps de base (T0), et l'y maintenir pendant un temps de maintenance (Ti).

3. Véhicule selon la revendication 1, dans lequel
- les moyens de gestion (100) sont configurés pour maintenir la pression de marche en roue libre (Pc) tant que les conditions de marche en roue libre continuent.

4. Véhicule selon l'une quelconque des revendications précédentes, dans lequel
l es moyens d'actionnement (100) sont configurés pour ramener la pression dans le circuit de frein de remorque (120) vers la pression de base (P0) si le moteur fournit de l'énergie aux roues.

5. Véhicule selon la revendication 4, dans lequel
- les moyens d'actionnement (100) sont configurés pour ramener la pression dans le circuit de frein de remorque (120) vers la pression de base (P0) si le moteur fournit de l'énergie au moins pendant un temps d'attente (Tz).

6. Véhicule selon l'une quelconque des revendications précédentes, dans lequel
- les moyens d'actionnement (100) sont configurés pour détecter l'actionnement d'un processus de freinage au moyen d'un conducteur et pour actionner par conséquent le frein de tracteur (12) et le frein de remorque (112) en même temps.

7. Procédé de gestion d'un processus de freinage d'un véhicule qui est constitué d'un tracteur (2) qui est doté d'un moteur (6) et d'une pédale de frein, et d'au moins une remorque (4) qui est dotée d'un frein de remorque (112), ledit procédé étant **caractérisé par** l'étape d'augmentation de la pression dans un circuit de frein de remorque (120) qui est relié au frein de remorque (112) depuis une pression de base préexistante (P0) à une pression de marche en roue libre (Pc) qui est inférieure à une pression d'actionnement (Pb) qui peut actionner le frein de remorque (112) pour le processus de freinage, dans une condition de marche en roue libre, dans laquelle la vitesse du tracteur est supérieure à une vitesse limite (Vt), le moteur (6) ne fournit pas d'énergie aux roues, et le tracteur (2) n'est pas freiné.
